(19) **Europäisches Patentamt European Patent Office Office européen des brevets**

(11) **EP 4 527 813 A1**

(12) **EUROPEAN PATENT APPLICATION**
published in accordance with Art. 153(4) EPC

(43) Date of publication:
26.03.2025 Bulletin 2025/13

(21) Application number: 22942343.9

(22) Date of filing: 19.08.2022

(51) International Patent Classification (IPC):
$C03C\ 27/10^{(2006.01)}$   $B32B\ 17/10^{(2006.01)}$
$B32B\ 27/30^{(2006.01)}$   $B32B\ 27/42^{(2006.01)}$
$B32B\ 27/40^{(2006.01)}$   $B32B\ 17/06^{(2006.01)}$
$B32B\ 33/00^{(2006.01)}$   $B60J\ 1/00^{(2006.01)}$
$B61D\ 25/00^{(2006.01)}$

(52) Cooperative Patent Classification (CPC):
B32B 17/06; B32B 17/10; B32B 27/30;
B32B 27/40; B32B 27/42; B32B 33/00; B60J 1/00;
B61D 25/00; C03C 27/10

(86) International application number:
PCT/CN2022/113495

(87) International publication number:
WO 2023/221314 (23.11.2023 Gazette 2023/47)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: 18.05.2022  CN 202210538548
18.05.2022  CN 202221189711 U

(71) Applicant: **Fuyao High Performance Glass
Technology
(Fujian) Co., Ltd.
Fuzhou, Fujian 350301 (CN)**

(72) Inventors:
• **DING, Yuan Chieh**
  **Fuzhou, Fujian 350301 (CN)**
• **YE, Shu**
  **Fuzhou, Fujian 350301 (CN)**

(74) Representative: **Patentanwälte Olbricht Buchhold
Keulertz
Partnerschaft mbB
Neue Mainzer Straße 75
60311 Frankfurt am Main (DE)**

(54) **LAMINATED VACUUM GLASS, PREPARATION METHOD THEREFOR AND USE THEREOF**

(57) The present application provides a laminated vacuum glass, a preparation method therefor and a use thereof. The laminated vacuum glass comprises a first glass plate and a second glass plate, as well as a vacuum layer formed by the first glass plate and the second glass plate; the first glass plate is laminated glass formed from at least two layers of glass and at least one layer of adhesive film; in addition, an edge of the vacuum layer is encapsulated by means of cold laser welding. The present invention also provides a preparation method for the laminated vacuum glass, and a use thereof as a vehicle window or a building exterior window. The laminated vacuum glass provided in the present invention has good sound insulation and thermal insulation properties. In addition, the light weight thereof is suitable for use in high-speed railways and other environments with special requirements for sound insulation and thermal insulation.

Figure 1B

EP 4 527 813 A1

**Description**

TECHNICAL FIELD

The present invention relates to a laminated vacuum glass, a preparation method therefor and the use thereof, belonging to the technical field of vacuum glass preparation.

BACKGROUND ART

Multi-layer Laminated insulated glass windows have long been widely used in the fields of rail transits, large-scale buildings, etc. Rail transits that have been popularized include high-speed railway trains (hereinafter referred to as high-speed trains), bullet trains, mass rapid transits, subway trains, light rail trains, etc., each being one of the important projects of infrastructure construction and playing an important role in economic construction and transportation. High-speed trains/bullet trains for which the requirements are the strictest will be discussed and used as the basis for extension to all rail vehicles below. The traveling speed gradually increases. For example, the average speed of previous bullet trains is 200 km/h, while the average speed of current high-speed trains is 300 km/h. The high-speed trains will gradually challenge the speed of 400 km/h or higher in future. As the speed increases, stricter requirements will be placed on the safety of carriage structure of high-speed trains and user experience. The side glass windows of carriages are directly exposed to environmental factors such as sunlight, the temperature difference outside, and rail noise. As the traveling speed increases, the requirements for the energy saving, noise reduction and weight reduction of side windows will become stricter.

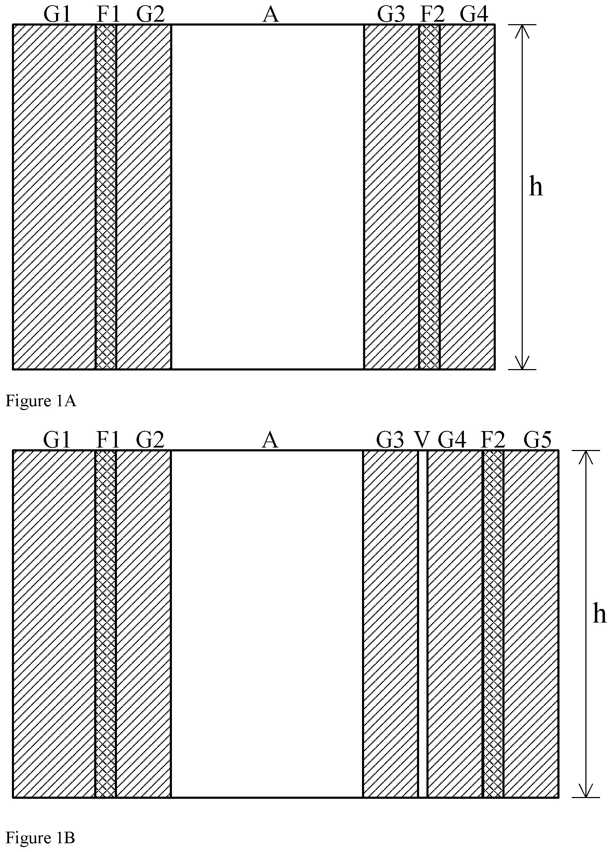

The windows of current bullet trains or high-speed trains are mainly composed of laminated insulated glass. A typical side window structure of high-speed train carriage is as shown in Fig. 1A. Laminated glass refers to a composite glass in which one or more organic polymer intermediate films are sandwiched between two or more sheets of glass, and subjected to high-temperature pre-pressing or high-temperature vacuum pressing such that the glass and the intermediate film are tightly bonded together. Common glass intermediate films such as polyvinyl butyral (PVB), an ethylene-vinyl acetate copolymer (EVA), an ethylene-methacrylic acid copolymer (SentryGlas® Plus, SGP) and a thermoplastic polyurethane elastomer rubber (TPU), as well as some relatively special intermediate films or decorative pieces such as a colored intermediate film, a low-E intermediate film, an intermediate film containing metal grids, and a PET or PI functional intermediate film can be installed between glass panes to form the laminated glass. Laminated glass has many functions, including improved impact-resistance, by means of which the safety and protection capabilities of glass windows are improved. When the glass breaks under external force, the glass cullet will adhere to the intermediate film, and is thus not easy to scatter and cause cuts. Some intermediate films are also capable of partial thermal insulation or partial sound insulation. Because of these advantages mentioned above, laminated glass is often used in vehicles such as cars. Laminated glass can also be used to make insulated composite glass which thereby has improved thermal and sound insulation effects and has been used for environment-friendly and energy-saving glass windows of high-rise buildings on a large scale. In recent years, due to the rapid development of rail transits such as subway trains, bullet trains and high-speed trains, insulated composite glass has also been used for door windows and side windows in the carriages.

Generally speaking, building glass and vehicle glass have two basic functions, providing safety protection and comfort. Additionally, as global warming becomes increasingly serious, environment protection, energy saving and carbon reduction are also key points to be considered, in which the thermal insulation and sound insulation properties of glass are particularly important. A single sheet of silver-plated glass with a thickness of 6 mm has a thermal conductivity (U value) of about $4.5\,W/m^2\cdot K$, and a silver-plated insulated glass made by combining two sheets of glass with a thickness of 6 mm has a hollow layer thickness of $\geq 10$ mm and a U value of about $1.5\text{-}2.0\,W/m^2\cdot K$. The former has a weighted noise transmission reduction ($R_w$) of about 25 dB, and the latter has an $R_w$ of about 27 dB. As the thickness of the glass and the thickness of the hollow layer decrease, both the general thermal insulation capability and the general sound insulation capability of glass window will decrease. If the three indicators of thermal insulation, sound insulation and weight reduction are required to be improved at the same time, it will become increasingly difficult to realize the above three increasingly-high indicators by the existing combination of the insulated and laminated glass. Thus, there is an urgent need in this field for a glass product capable of meeting the aforementioned three requirements at the same time.

SUMMARY OF THE INVENTION

To solve the aforementioned technical problem, an object of the present invention is to provide a laminated vacuum glass which can obtain a glass having better sound and thermal insulation effects as well as a lighter weight by using a special structure and welding method.

To achieve the aforementioned object, the present invention provides a laminated vacuum glass comprising a first glass pane, a second glass pane, and a vacuum layer formed by the first glass pane and the second glass pane, wherein the first glass pane is a laminated glass formed by at least two layers of glass and at least one layer of adhesive film;

and an edge of the vacuum layer is sealed by means of cold laser welding.

According to a specific embodiment of the present invention, preferably, a hollow layer is provided in the first glass pane or the second glass pane, and in this case, the laminated vacuum glass of the present invention can be referred to as "vacuum + insulated" laminated glass, wherein the thickness of the hollow layer is preferably 8-16 mm.

According to a specific embodiment of the present invention, preferably, the vacuum layer is located between a glass pane and a laminated glass pane or between two layers of laminated glass pane, and the periphery of the two glass panes closest to the vacuum layer has a length at least 10 mm longer than that of other glass panes to form a protruding portion which is used for hermetic sealing performed by means of laser welding and an sealant, and at least one through-hole for suction with a diameter of not less than 1 mm is provided in one glass pane of the protruding portion; the vacuum layer is assembled under an atmospheric pressure, and the maximum process temperature is not more than 120°C. After the hermetic sealing at the periphery of the vacuum layer, when viewed directly under daily visible light, the glass has a transparent and traceless laser seam.

According to a specific embodiment of the present invention, preferably, the thickness of the vacuum layer is 0.1-0.5 mm. By controlling the thickness of the vacuum layer within an appropriate range, the laminated vacuum glass of the present invention can have good sound insulation and thermal insulation properties. When the thickness of the vacuum layer is 0.2-0.35 mm, the optimal thermal insulation effect can be realized. When the thickness exceeds 0.5 mm, the thermal insulation effect will decrease, and when the thickness is less than 0.2 mm, the manufacturing yield will decrease.

According to a specific embodiment of the present invention, preferably, an appropriate number of tiny supports are disposed in the vacuum layer. When a vacuum condition is formed in the vacuum layer (the gas pressure is less than 0.01 Pa), sufficient supporting force can be provided so that the glass pane can withstand atmospheric pressure without deformation. If the supporting force is insufficient, the glass panes will get close to each other, which will change the thickness of the vacuum layer and affect the sound insulation and thermal insulation properties of the laminated vacuum glass.

According to a specific embodiment of the present invention, preferably, the first glass pane is a laminated glass formed by two layers of glass and one layer of adhesive film; and the thicknesses of the two layers of glass are not less than 3 mm and not less than 1 mm respectively, the total thickness of the two layers of glass (excluding the thickness of the adhesive film) is not more than 10 mm, and the thickness of the adhesive film is not less than 0.7 mm.

According to a specific embodiment of the present invention, preferably, the first glass pane is a laminated glass formed by three layers of glass and one layer of adhesive film, and the hollow layer is provided between two of the three layers of glass, that is, a hollow layer is provided in the first glass pane.

According to a specific embodiment of the present invention, preferably, the second glass pane is a laminated glass formed by at least two layers of glass and at least one layer of adhesive film.

According to a specific embodiment of the present invention, preferably, the second glass pane is a laminated glass formed by at least three layers of glass and at least two layers of adhesive film.

According to a specific embodiment of the present invention, preferably, the second glass pane is a laminated glass formed by two layers of glass and one layer of adhesive film; and the thicknesses of the two layers of glass are not less than 2 mm and not less than 1 mm respectively, the total thickness of the two layers of glass is not more than 8 mm, and the thickness of the adhesive film is not less than 0.7 mm.

According to a specific embodiment of the present invention, preferably, the second glass pane is a laminated glass formed by three layers of glass and two layers of adhesive film; and the total thickness of the three layers of glass is not more than 8 mm, and the total thickness of the two layers of adhesive film is not more than 3.2 mm.

According to a specific embodiment of the present invention, preferably, the glass is selected from one of or a combination of two or more of soda-lime glass, aluminosilicate glass and borosilicate glass.

According to a specific embodiment of the present invention, preferably, the adhesive film is selected from one of a PVB film, an EVA film, a SGP film and a TPU film.

According to a specific embodiment of the present invention, preferably, when cold laser welding is used, the number of seams is determined according to the following formula:

$$N > \frac{\alpha \cdot \Delta T \cdot E \cdot H}{S_{sealing} \cdot w}$$

where N is the number of seams;

w is the average width of seams, in mm;

$S_{sealing}$ is the welding strength of a weld sealing region, in MPa;

$\alpha$ is the thermal expansion coefficient of the glass, in °C$^{-1}$;

$\Delta T$ is the temperature difference between the glass panes on both sides of the vacuum layer, in °C;

E is the elastic modulus (Young's modulus) of the glass, in MPa; and

H is the thickness of a thermally expanded glass pane, in mm.

According to a specific embodiment of the present invention, preferably, the number of seams is $\geq 2$.

According to a specific embodiment of the present invention, preferably, the vacuum layer is provided with a micro-pillar; and more preferably, the micro-pillar is a flexible micro-pillar which has at least one fiber layer, i.e., the flexible micro-pillar described in the invention patent application No. 202210074202.5 which is incorporated herein by reference in its entirety.

According to a specific embodiment of the present invention, preferably, the flexible micro-pillar has a composite structure formed by two or more fiber layers.

According to a specific embodiment of the present invention, preferably, the flexible micro-pillar has a composite structure formed by at least two fiber layers and at least one metal layer and/or alloy layer, wherein the metal layer and/or alloy layer is located between the two fiber layers.

According to a specific embodiment of the present invention, preferably, the flexible micro-pillar has a composite structure formed by at least three fiber layers and at least two metal layers and/or alloy layers, wherein the metal layers and/or alloy layers are each sandwiched between two of the fiber layers.

According to a specific embodiment of the present invention, preferably, in the flexible micro-pillar, the thickness of the fiber layer is 0.1 mm to 3.0 mm.

According to a specific embodiment of the present invention, preferably, in the flexible micro-pillar, the thickness of the metal layer or alloy layer is 0.3 mm or less, preferably 0.01 mm to 0.3 mm.

According to a specific embodiment of the present invention, preferably, the diameter of the flexible micro-pillar is 0.2 mm-2.0 mm; and preferably 0.2 mm-0.5 mm.

According to a specific embodiment of the present invention, preferably, the thermal conductivity of the flexible micro-pillar is $\leq 1$ W/m·K (25°C); and more preferably, the thermal conductivity of the flexible micro-pillar is $\leq 0.25$ W/m·K (25°C).

According to a specific embodiment of the present invention, preferably, in the flexible micro-pillar, the fiber layer is made from ultrafine fibers; and more preferably, the material of the ultrafine fiber is one of or a combination of two or more of aluminosilicate glass, boroaluminosilicate glass, soda-lime glass, borosilicate glass, quartz glass, metal and alloy.

According to a specific embodiment of the present invention, preferably, in the flexible micro-pillar, the thermal conductivity of the fiber layer is $\leq 0.03$ W/m·K (25°C).

According to a specific embodiment of the present invention, preferably, in the flexible micro-pillar, the specific surface area of the fiber layer is 700-800 m$^2$/g.

According to a specific embodiment of the present invention, preferably, in the flexible micro-pillar, the material of the metal layer includes one of aluminum, copper, iron, tin, and zinc; and the material of the alloy layer includes an alloy of two or more elements of aluminum, copper, iron, tin and zinc, and more preferably, the alloy includes stainless steel.

According to a specific embodiment of the present invention, preferably, the height of the flexible micro-pillar under the compression of a pressure at 1 atmosphere is not less than 0.10 mm, more preferably 0.15-0.5 mm, and further preferably 0.15-0.25 mm.

According to a specific embodiment of the present invention, preferably, a radiation-resistant film is provided on the surface of one side inside the vacuum layer. The radiation-resistant film may be that commonly used in the art.

The present invention also provides a preparation method for the aforementioned laminated vacuum glass, comprising the steps of:

installing a glass edge strip and disposing a micro-pillar between the first glass pane and the second glass pane; and respectively welding the glass edge strip to the first glass pane and the second glass pane using cold laser welding, and then evacuating to form a vacuum layer, followed by sealing the edge and opening to obtain the laminated vacuum glass;

or, forming a groove on the surface of the first glass pane or the surface of the second glass pane;

and welding the first glass pane to the second glass pane using cold laser welding, wherein the welding is carried out at the edge of the groove, and then evacuating to form a vacuum layer, followed by sealing the edge and opening to obtain the laminated vacuum glass.

According to a specific embodiment of the present invention, preferably, the full width at half maximum of the laser pulse (Pulse Width, FWHM, or pulse duration) of the cold laser is less than or equal to 20 pico seconds.

According to a specific embodiment of the present invention, preferably, the wavelength of the laser used in the cold laser welding is 800 nm-1,600 nm (for example, 800 nm, 1,045 nm, 1,558 nm, 1,064 nm, preferably 1,064 nm).

According to a specific embodiment of the present invention, preferably, the repetition rate of the laser used in the cold laser is 1 Hz-10 MHz.

According to a specific embodiment of the present invention, the two glass surfaces at the welding point are in close contact, and preferably the gap between the glass panes at the weld is less than 40 $\mu$m, preferably less than 25 $\mu$m.

According to a specific embodiment of the present invention, preferably, the width of the seam is not more than 20 $\mu$m, preferably less than 5 $\mu$m.

According to a specific embodiment of the present invention, preferably, the welding strength of the seam is greater than the thermal expansion shear stress between the two glass panes welded, and more preferably the welding strength of the seam satisfies:

$$S_{sealing} > \frac{\alpha \cdot \Delta T \cdot E \cdot H}{d}$$

or is at least greater than 1 MPa.

In the above formula, $S_{sealing}$ is the welding strength of a weld sealing region, in MPa;

$\alpha$ is the thermal expansion coefficient of the glass, in °C$^{-1}$;

$\Delta T$ is the temperature difference between the glass panes on both sides of the vacuum layer, in °C;

E is the elastic modulus (Young's modulus) of the glass, in MPa;

H is the thickness of a thermally expanded glass pane, in mm;

and d is the width of the weld sealing region, in mm.

Here, the weld sealing region refers to the width of a zone in which seams are distributed. For example, if a total of 5 parallel seams are used, the spacing distance between the two outermost seams (from the edges on the outer sides of the two seams) is defined as the d value here.

According to a specific embodiment of the present invention, preferably, the spacing distance between the seams is not less than 150 $\mu$m, and the depth of the seam at one of the two glass panes welded is not less than 20 $\mu$m.

According to a specific embodiment of the present invention, preferably, the shape of the seam is consecutive or discontinuous.

According to a specific embodiment of the present invention, preferably, a single seam is in a form of a straight line, an oblique line or a broken line.

According to a specific embodiment of the present invention, preferably, the seams are in the shape of straight lines parallel to each other, or oblique lines parallel to each other, or broken lines parallel to each other; or, the seams are in the shape of parallel and discontinuous straight lines, or staggered oblique lines, or consecutive fish-like lines.

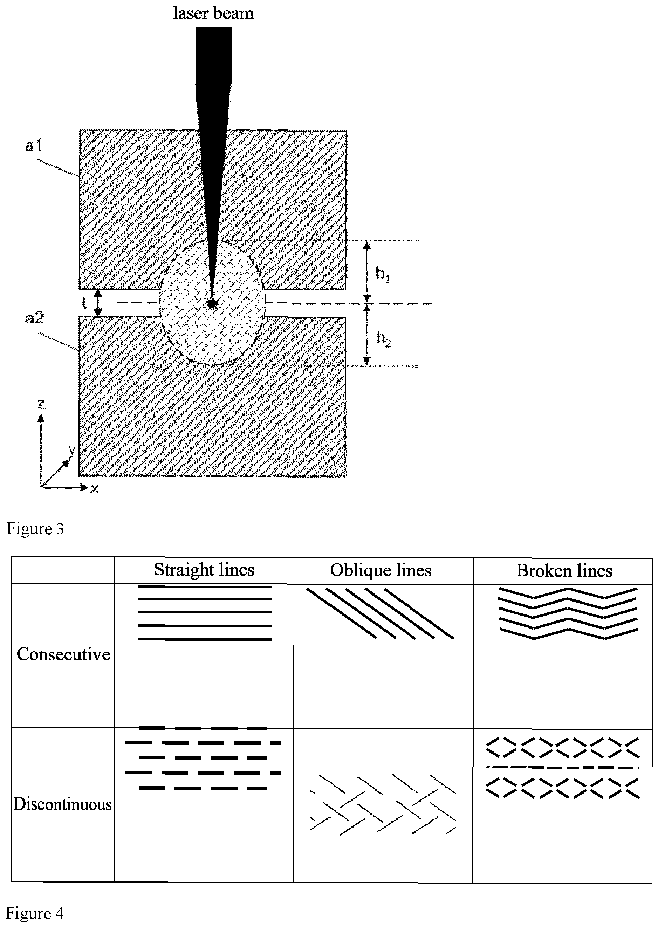

According to a specific embodiment of the present invention, preferably, the seams are in the shape of one of the shapes shown in Fig. 4.

When used as a side window of a high-speed train with a speed of 400 km/h, the laminated vacuum glass provided by the present invention can have a thermal conductivity U value of 0.9 W/m$^2$·K or less and a Rw of greater than 46 dB, thus having good sound insulation and thermal insulation properties. Additionally, the laminated vacuum glass has a relatively light weight and is suitable for use in high-speed trains and other environments with special requirements for sound insulation, thermal insulation, etc.

BRIEF DESCRIPTION OF THE DRAWINGS

Fig. 1A is a schematic diagram of the structure of a laminated insulated glass.

Fig. 1B is a schematic diagram of the structure of a "vacuum + insulated" laminated glass.

Fig. 1C is a schematic diagram of the structure of a vacuum composite glass.

Figs. 2A and 2B are schematic diagrams of cold laser welding.

Fig. 3 is a schematic diagram of the position of the welding point with respect to the Z-axis.

Fig. 4 is a schematic diagram of seam types.

Figs. 5A and 5B are schematic diagrams of welding effects.

EMBODIMENTS

In order to understand the technical features, object and beneficial effects of the present invention more clearly, then the technical solution of the present invention is described in detail as below, but it cannot be construed as a limitation for the implementable scope of the present invention.

**Cold laser welding**

The glass of the present invention can be welded by means of cold laser welding, that is, welded by means of a laser with a laser pulse full width at half maximum (Pulse Width, FWHM, or pulse duration) of less than or equal to 20 pico seconds, for example: the pico second laser from Wuhan Raycus Fiber Laser Technologies Co., Ltd., which has a laser pulse full width at half maximum of 800 fs (that is, 0.8 ps), and the IceFyre 1064-50 laser from MKS Spectra-Physics corporation in USA, which has a laser pulse full width at half maximum of 10 ps can be used.

**Vacuum laminated glass, "vacuum + insulated" laminated glass:**

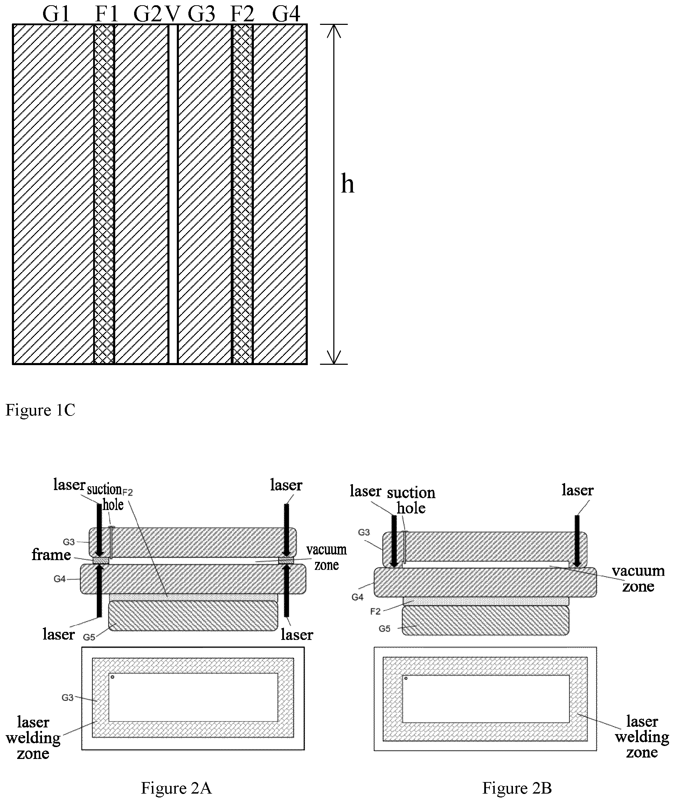

Fig. 1B and Fig. 1C represent a "vacuum + insulated" laminated glass, and a vacuum double laminated composite glass respectively. In a similar fashion, there can be a composite glass combining a plurality of vacuum layers and a plurality of interlayers. The symbols G1, G2, G3, G4 and G5 represent glass. Usually, the glass G1 has the largest thickness and is used for the outer side of a window. The glass G2-G5 is the middle or inside glass and is usually thinner than the glass G1. On the one hand, such design can reduce weight, and on the other hand, the asymmetrical thickness design is used to reduce the resonance sound caused by the sound outside carriages, and thereby slightly improve the sound insulation property. A glass pane or an impact-resistant transparent plastic plate such as a PC plate can be used for the innermost window plate, depending on the requirements of application scenarios. The symbols F1-F2 represent the adhesive films of the laminated glass. The most commonly used film is a PVB film that can have a thickness of 0.76 mm or 1.52 mm. The symbol v represents a vacuum layer formed by assembling the laminated glass on both sides. The symbol A represents a hollow layer. The vacuum layer or hollow layer can be provided with a radiation-resistant film, and specifically, a plated film such as a Low-E film, or an attached film, so as to reduce the heat inside carriages caused by external sunlight radiation, and meanwhile make passengers in carriages feel more comfortable. The outer frame of the overall vacuum laminated glass is usually made of an aluminum alloy or fiber-reinforced plastic (FRP), and has a structure comprising matching rubber strips and sealing gaskets to realize shock absorption, water resistance, moisture resistance, sound insulation and other functions.

The vacuum laminated glass structures shown in Figs. 1B and 1C have the following characteristics: (1) A laminated glass is used as the side plate of a vacuum glass, because the laminated glass is a composite material with strength and rigidity much higher than those of a single-layer glass pane with the same thickness; and (2) In place of performing vacuum sealing using the current high-temperature solder sintering method commonly used in the industry, cold laser is used to directly weld glass at normal temperature, and then the hermetic sealing with a sealant is performed using a gas suction method.

Neither the use of solder nor the high-temperature sealing will be required for the edge sealing of the vacuum layer. Instead, the glass is laser-welded at normal temperature, which has great significance in protecting environment, saving energy and improving production efficiency. In the present invention, a side wall is used for the edge sealing of the vacuum layer. The material of the side wall is the same as that of the glass pane itself. The structure of the side wall may be composed of a glass frame as shown in Fig. 2A. By means of cold laser welding at normal temperature, the glass panes are respectively welded to the frame sandwiched between the two glass panes so as to form an enclosed interlayer. or, the structure of the side wall may be as shown in Fig. 2B. In other words, at least one of the two glass panes forming the vacuum layer is first partially thinned to a thickness of 0.3 mm or less to form a groove, wherein the method for thinning includes but is not limited to mechanical grinding and polishing, chemical etching, etc.; only the central portion of the glass is thinned, and the peripheral frame portion is reserved; and then the glass pane which has been thinned in the central area is welded to another glass pane at the peripheral portion using cold laser. Both of the aforementioned methods can be used to make a vacuum layer structure at normal temperature. In sequence, the laminated glass on both sides of the vacuum layer shall be made first, then the laminated glass on both sides of the vacuum layer is laser welded to form a composite laminated glass, and finally a sealant is applied and the hermetic sealing is completed to obtain the vacuum glass.

**Multi-layer laminated vacuum glass:**

As mentioned above, since a laminated glass pane is used as a side plate of a vacuum glass, due to the limitation of the temperature resistance of the sandwiched adhesive film, a conventional sealing process in which a solder is sintered at a high temperature cannot be used. Therefore, in the present invention, the glass is laser-welded at normal temperature.

To be more specific, two sheets of glass are directly welded together at room temperature (or a temperature lower than the working temperature of a sandwiched adhesive film) using cold laser, and meanwhile a liquid sealant is used to achieve gas tightness. The gas tightness mentioned here means that the vacuum state in the vacuum layer can be maintained at a gas pressure lower than $10^{-2}$ Pa for a long time. Laser welding is a hard soldering process (welding process) in which the contact surfaces of two sheets of glass are directly melted, bonded and cooled in a moment, and no solder is required during the processing. Therefore, the whole process of laser welding can be completed at room temperature without heating a solder. Additionally, the characteristic of laser welding is that when the material is exposed to laser, the time for completing heating and cooling is less than or equal to 20 pico seconds (ps). Within such a short period of time, heat energy (generated in a micro-region of the material where is exposed to laser) cannot be transferred to peripheral micro-regions before the material cools, so there will be no surplus heat destroying peripheral micro-structures, thus the glass material at the weld will not be damaged, and no residual thermal stress will be left. The laser with a pulse duration of less than or equal to 20 pico seconds is also regarded as a cold laser, meaning that no thermal stress will be generated and there is no thermal damage to the glass.

As shown in Fig. 2A and Fig. 2B, the frame may be made in two forms. As shown in Fig. 2A, the pre-made edge strips are used to make a frame that matches the shape of the glass window. The frame itself is formed as one without gaps which can permeate a gas. Then the frame is placed between the two side plates forming the vacuum layer, and aligned, and then welded by means of cold laser. During welding, the positions of the welding points are close to each other, the distance between the two glass surfaces at the weld is smaller than the diameter of the laser focus, and the glass surface is be kept clean without other solid and liquid contaminants other than glass. These contaminants will absorb the laser energy which leads to the energy cannot be transferred to the glass micro-region structure at the welding point. In the pre-treatment procedure of glass, the glass surface at the welding point shall be treated to be flat, clean and dry. The glass laser-welding itself utilizes the nonlinear optical principle of cold laser and is relatively unaffected by the glass material. When the laser is focused on the interface of welding points, the compacted glass interface can be instantly stimulated to melt, and then the glass is integrated into one and cooled down quickly without leaving any thermal stress. As shown in Fig. 2A, the frame and the glass panes on both sides form two interfaces, so it is necessary to perform laser welding for the interfaces on both sides respectively. In the method as shown in Fig. 2B, the glass interface is only formed on one side, so only one interface needs to be laser-welded.

The construction steps of the multi-layer laminated vacuum glass window are as follows.

Fig. 2A (frame structure):

Pre-treating glass panes (cutting, grinding, drilling and washing) → sandwiching an adhesive sheet (composite plate 1 and composite plate 2) → installing a glass edge strip between composite plate 1 and composite plate 2 → disposing supports → laser-welding at normal temperature → evacuating → sealing the edge (a sealant is sucked into the periphery of the seam) → sealing the opening → installing an outer frame of window to obtain the laminated vacuum glass, wherein the composite plate 1 is glass G3, and the composite plate 2 is a glass pane made of glass G4, glass G5 and adhesive film F2.

Fig. 2B (partially-thinned structure):

Pre-treating glass panes (cutting, grinding, drilling and washing) → taking one of the glass panes for partial etching → sandwiching an adhesive sheet (etched composite plate 1 and composite plate 2) → disposing supports at the concave platform of the etched composite plate → aligning the composite plate 2 and the etched composite plate 1 in vertical direction → one side laser welding at normal temperature → evacuating → sealing the edge (a sealant is sucked into the periphery of the seam) → sealing the opening → installing an outer frame of window to obtain the laminated vacuum glass, wherein the etched composite plate 1 is glass G3, and the composite plate 2 is a glass pane made of glass G4, glass G5 and adhesive film F2.

**Edge sealing of multi-layer laminated vacuum glass---glass laser-welding**

Step 1. Material preparation

Glass G3 is used as a cover plate, and it is possible but not necessary to temper the glass pane in advance. Glass G4 is used as a bottom plate, and it is possible but not necessary to temper the glass pane in advance. For convenience of calculation, a flexible circular pillar with a fiber structure is used as a micro-pillar, which has a diameter of 0.5 mm and a height determined by the thickness of the vacuum layer.

Step 2. Vacuum layer frame

Group 2a: A glass, the material of which is the same as that of glass G3 or glass G4, is cut into four strip-shaped glass or a square frame according to the lengths of the four sides of glass G3 and glass G4, and used as the frame of the vacuum layer. The frame has a width normally not greater than 20 mm, and a thickness not more than 0.5 mm. The glass edge strip/frame has a clean, flat and dry surface.

Group 2b: An acid-resistant protective film is closely attached to a first surface of glass G3 (not the thinned surface), an acid-resistant film is closely attached to the edge portion of a second surface, the edge portion having a width not exceeding 20 mm (used as a frame), and the peripheral portion is also protected with an acid-resistant adhesive, and then the glass G3 is placed in a chemical thinning tank to thin the portion not protected by the acid-resistant film, wherein the thinning depth does not exceed 0.5 mm. After thinning, the protective film is removed and the glass surface is cleaned so that the surface is clean, flat and dry. The peripheral portion of the second surface of glass G3 is not thinned and can be used as the frame.

Step 3: Glass laser welding

The glass G3 used as the cover plate, the glass G4 used as the bottom plate, the frame and the micro-pillar are respectively placed at an appropriate position according to the forms as shown in Fig. 2A or Fig. 2B. The suction hole can be on the cover plate or the bottom plate. The glass pane with the suction hole is placed flat on a suction table of a laser welding work platform, and then the suction of the work platform is started, thus the cover plate, the bottom plate and the frame are all sucked and fixed on the laser welding platform. At the same time, the laser and the x-y axis movement mechanism of the work platform are started, and the glass frame is laser-welded according to the preset route. The power, focal length, spot size and other parameters of laser can be adjusted according to different samples. During laser welding, the focus is at the center of the surfaces of the two sheets of glass to be welded, as shown in Fig. 3, and the distance between the two glass surfaces at the welding point shall be smaller than the spot diameter D, so that the laser energy can penetrate evenly into the two glass surfaces to be welded. The glass at the welding point is fused together under the action of instantaneous high energy. Since a high-energy laser is emitted in a pulse mode, the welding is performed in the form of spot welding. Although the welding strength is very high, it is still necessary to use a vacuum-resistant sealant for hermetic sealing.

The welding effect varies with the combinations of laser wavelengths and operating parameters, but all of the combinations enable glass to be firmly welded together. The laser wavelength, pulse repetition rate and pulse duration that have been currently proven to be applicable to glass laser welding are summarized in Table 1 below.

Table 1

| Laser wavelength | Repetition rate | Pulse duration |
| --- | --- | --- |
| 800 nm | 1 kHz | 85 fs |
| 1045 nm | 500 kHz to 1 MHz | 350 to 400 fs |
| 1558 nm | 500 kHz | 950 fs |
| 1064 nm | 500 kHz to 1 MHz | 10 ps to 325 fs |

Step 4: Vacuum hermetic sealing

Belonging to spot welding, the glass laser welding can provide a sufficient welding strength, but cannot ensure a hermetic welding. Therefore, for making a vacuum glass, a vacuum degree of 0.01 Pa needs to be maintained for a long time, and the seam will need to be filled with a vacuum-resistant sealant to ensure the effect of hermetic sealing. The operating method is relatively simple. A vacuum-resistant sealant is used. Any sealant which is easy to flow and non-volatile and has a viscosity not exceeding 500 cp, a controllable gluing reaction time and other properties can be used. During construction, the welded vacuum glass assembly is firstly subjected to suction via the suction hole so that the gas pressure inside the glass interlayer is lower than 100 Pa, and then a sealant is applied to the outer edge of the glass frame. When arriving at a gas hole or a gap, the sealant will be sucked in due to the negative pressure in the glass interlayer. When the gluing reaction of the sealant is completed, the seam can realize the effect of hermetic sealing. After the seam has been sealed, the suction hole is sealed with a sealing glass or a sealing alloy, and the vacuum layer is completely sealed.

Sealants that can be used for the hermetic sealing of the seam of glass can include but are not limited to a silicone sealant, an acrylate sealant, a polyurethane sealant, a synthetic rubber, a siloxane sealant, a polyisobutylene resin sealant and a modified olefin sealant. Gluing methods include but are not limited to chemical reaction curing, UV curing, infrared heat curing and drying curing.

The sealant shall be sucked in smoothly to fill the pre-formed weld gap, and the seam itself functions to weld and fasten the two sheets of glass. Therefore, the length, spacing, direction and distribution of the seam will directly affect the overall welding strength and the successful introduction of the sealant to the weld gap. Based on actual practical experience, it is found that the rules and the seam distribution patterns shown in Fig. 4 can effectively meet the requirements for welding strength and hermetic sealing at the same time, and applicable seam patterns include but are not limited to the patterns shown in Fig. 4.

EXAMPLES:

Process parameters of glass laser welding (without a solder), welding strength, seam micro-structure, seam invisibility and hermetic properties were verified.

(1) Process parameters of laser welding

A femtosecond infrared laser was used as the tool for glass laser welding, and the welding between two glass planes can be effectively completed under the following parameters:

Table 2

| Laser light source type | Femtosecond infrared solid laser |
|---|---|
| Center wavelength | 1064 nm |
| Pulse width | < 800 fs |
| Repetition frequency | $\leq$ 1 MHz |
| Maximum single pulse energy | 100 $\mu$J |
| Beam mass $M^2$ | $\leq$ 1.2 |
| Power stability | < 3% |
| Spot diameter | 50 $\mu$m |

(2) Welding strength test

Two sheets of soda-lime glass with a length of 100 mm, a width of 50 mm and a thickness of 3 mm were subjected to cutting, grinding, drilling, washing and other processing procedures; and then the two sheets of glass were stacked one above the other in the form of a cross, and placed on a laser welding platform. A vacuum adsorption device of the welding platform was started, and the glass was welded at room temperature, with a laser power of 8 W. The seam was a straight line with an average width of 50 $\mu$m and a length of 40 mm, and there were 10 parallel seams on each glass sample tested. Samples with a weld distance of 2 mm were made respectively, and subjected to a tensile test according to GB/T 31541. According to the test results, when the laser parameters were as shown in Table 2, for the untempered soda-lime glass, the calculated average welding strength per unit length of seam was in the range of 15-60 MPa. The tempered soda-lime glass had an average welding strength in the range of 1-20 MPa.

In a laminated vacuum glass window, due to the high thermal insulation efficiency of the vacuum layer, the glass panes on both sides of the vacuum layer may be at two different temperatures. For example, in winter, the indoor temperature may be 20°C while the outdoor temperature may be lower than -10°C. Likewise, in summer, the indoor temperature may be maintained at 20°C while the outdoor temperature may reach 40°C or higher. When such a temperature difference occurs, the glass material will thermally expand and contract naturally. The glass pane exposed to the relatively high temperature will expand significantly. On the contrary, the glass pane exposed to the relatively low temperature will contract significantly. By controlling the number of seams and the welding strength, the present invention enables the prepared laminated vacuum glass to overcome the influence of the expansion or contraction of the glass pane, ensuring that even if the indoor temperature was inconsistent with the outdoor temperature (the difference was relatively large, such as a temperature difference of 20°C-30°C), the welded sealing structure will not be damaged due to the strain caused by the temperature difference between the inside and the outside, and the seam or the welding point will not fall off or even break, thereby good sealing properties and strength can be maintained.

(3) Observation of seam micro-structure

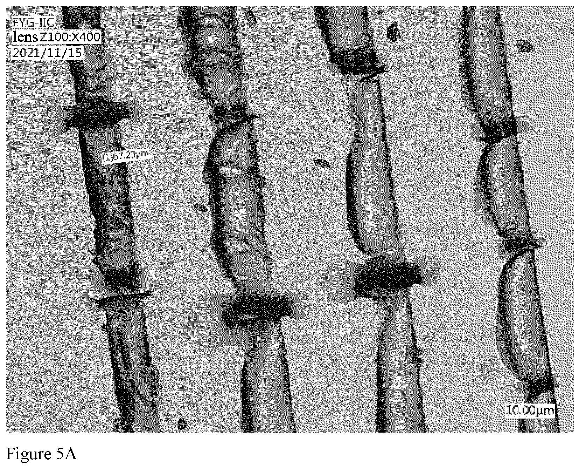

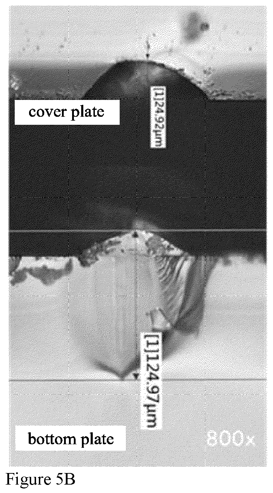

Figs. 5A and 5B showed the micro-structures after the laser welding of two sheets of soda-lime glass with a thickness of 3 mm in this embodiment. The welded sample was subjected to tensile test until the two sheets of glass were separated, the front surface (Fig. 5A) and the cross section (Fig. 5B) were observed respectively. It is clearly visible in Fig. 5A that the seam bonded two glass surfaces together. After the two sheets of glass were separated in the tensile test, the cracks on the glass surface can be seen at the seam, indicating that the strength at the weld was not less than the breaking strength of the glass itself. Fig. 5B showed a seam depth of about 125 $\mu$m. With the glass sample in Fig. 5B as an example, about 24 $\mu$m was located at the upper glass and about 100 $\mu$m was located in the lower glass, indicating that the focus position of the laser spot was between the two sheets of glass, and was slightly inclined to the lower glass, so a relatively large amount of spherical plasma energy formed by the spot was distributed on the lower glass surface, causing the penetration of seam to be inclined to the lower glass in terms of depth. It can also be known therefrom that if the spot was focused on the center of the gap t between the two glass panes as shown in Fig. 3, the upper glass $a_1$ will have a welding depth $h_1$, the lower glass $a_2$ will have a welding depth $h_2$, and both of the welding depths were slightly more than 60 $\mu$m.

(4) Seam invisibility test

The glass laser welding of the sample in this example can be regarded as an invisible welding under normal visible light. When viewed directly, the seam cannot be observed by naked eyes, and can be seen only under polarized light.

(5) Hermetic test

After the laminated glass pane was laser-welded, under an evacuated state, the suction force resulting from the negative pressure in the vacuum layer will make a sealant to penetrate into the gap between the glass panes at the welding position, and the effect of hermetic sealing can be achieved after curing. A square soda-lime glass pane with a side length of 300 mm and a thickness of 4 mm was subjected to a pre-treatment, washing and drying, and then the structure in Fig. 2B was used to make the vacuum glass. The length of the two sheets of glass in the center was 320 mm, which was 20 mm longer than the outer glass. Such a design was used for welding and hole punching. One of the two sheets of glass was etched using chemical thinning, forming the pattern of glass G3 as shown in Fig. 2B. With the peripheral portion not thinned, the central region of glass G3 was etched until a depth of 0.2 mm for use as the vacuum layer. A suction hole with a diameter of about 2 mm was provided on the inner side of the frame (close to the vacuum layer) about 5 mm from the edge. The suction hole was processed with a laser drilling machine to ensure a smooth and neat edge. The laminated glass panes on both sides of the vacuum layer were welded together using a laser (with a wavelength of 1,064 nm and a power of 8 W) in a discontinuous welding method, and then a vacuum pump was used to suck out the gas in the vacuum layer via the suction hole to form a negative pressure. At this time, a liquid sealant was applied to the step where the edges of glass G3 and glass G4 jointed, as shown in Fig. 2B. With a viscosity less than 1,000 cp, the liquid sealant was sucked into the gap between glass G3 and glass G4 at the weld. The liquid sealant was a siloxane reactive compound. The sealing operation was completed upon the completion of reaction. At this time, the vacuum layer was evacuated until the air pressure inside was lower than 0.01 Pa, and then the suction valve was closed tightly, and a helium mass spectrometer leak detector (SFJ-231 manufactured by Anhui Wanyi Science and Technology Co., Ltd.) and a Infitech CFV106 Pirani gauge were used to observe and determine whether there was gas leakage. The test results showed that the vacuum degree can be maintained and there was no gas leakage.

(6) Improvement of thermal insulation and sound insulation effects

The aforementioned process mainly illustrated the unique application of cold laser welding in a vacuum laminated glass. Without cold laser welding, it was impossible to combine the three adhesive films of PVB, SGP and TPU with the vacuum layer. This indicated a special and necessary role played by cold laser welding here.

With a high-speed train having a speed of 350 km/h as an example, the three important things for side windows are: (1) weight reduction of the window module; (2) the thermal conductivity U value of the window shall be less than 1.6 $W/m^2 \cdot K$ when the train is stationary; and (3) as for the noise inside carriages, the weighted transmission loss of the window shall be not less than 43 dB according to national standard GB/T 8485. When the speed of the high-speed train is further increased to 400 km/h, the specification requirements will become stricter. The important specification requirements at different speeds were summarized in Table 3. From the data in Table 3, It can be found that the weight of the side window needs to be reduced by 10%, the thermal conductivity U value needs to be reduced by 28%, and the sound reduction index needs to be increased by 7%. The present invention mainly makes innovations on the weight reduction, the construction method, the thermal conductivity U value and the noise of the window glass module.

Table 3

| High-speed train speed level | 350 km/h | 400 km/h | Adjustment degree (%) |
|---|---|---|---|
| Standard window weight (Kg) | ≤ 55 | ≤ 49 | -10 |
| Thermal conductivity U (W/m²·K) | 1.4 | 1.0 | -28 |
| Sound isolation (dB) | 43 | 46 | +7 |
| Resistance to gravel impact | > 220 km/h | | |
| Module thickness | ≤ 35 mm | | |

Weight reduction of side window of high-speed train carriage:

The simplified schematic diagram of the side window of a high-speed train with a speed of 350 km/h is as shown in Fig. 1A, wherein the G1/F1/G2 on the left side is the outer side and is exposed to external environment. The glass G2 is usually plated with a radiation-resistant film (Low-E film) to reduce sunlight radiation, and a typical combination in terms of material and thickness is (soda-lime glass, 6 mm)/(PVB sound insulation adhesive film, 1.5 mm)/(soda-lime glass, 4 mm). The G3/F2/G4 on the right side in Fig. 1A is the inner side of the side window and is exposed to the environment inside the carriage. A typical combination in terms of material and thickness is (soda-lime glass, 4 mm)/(PVB sound insulation adhesive film, 1.5 mm)/(soda-lime glass, 4 mm). Between the laminated glass on the left side and the laminated glass on the right side is a hollow layer A which is filled with argon and has a thickness of 14 mm. The three parts are combined by the bonding of an inner frame and a sealant inside the frame, with a total thickness of 35 mm. It can be seen from the data in Table 3 that the weight of carriage side window of a high-speed train with a speed of 400 km/h shall be reduced by 10%, the thermal insulation effect shall be increased by 28%, and the noise shall be reduced by 7%; but the safety requirements for the original window glass module strength such as resistance to gravel impact shall still be maintained. It is obvious that the use of the originally-designed glass material and thickness cannot meet the requirements for weight reduction and safety strength maintenance.

Physical quantities directly related to weight include volume and density, and the length and the height of the side window of the high-speed train are fixed. Therefore, only by reducing the thickness of the glass or PVB film can achieve the weight reduction by means of volume path. However, the inventors of the present invention have found through researches that: The risks of reducing weight by means of the volume path are as follows: (1) as the thickness of the glass or PVB film decreases, the material strength of the laminated glass will decrease; and (2) as the material thickness decreases, the sound insulation and thermal insulation capabilities of the laminated glass module will decrease. Therefore, if this path is used, a corresponding remedial method will be required to make up for the loss of the three properties above. Moreover, the corresponding remedial method not only can make up for the reduced performance but also can even further improve the thermal insulation capability by 28% and the sound insulation capability by 7% (see Table 3).

In the present invention, another path was used in the technical solution, that is, density reduction. In the present invention, a glass with a relatively low density was used in place of the original soda-lime glass. Currently, the glass pane materials that can be mass-produced in the glass industry can be divided into three types of materials: soda-lime glass (commonly known as window glass), aluminosilicate glass (commonly known as high aluminum glass, for example, mobile phone cover plate), and borosilicate glass (commonly known as high borosilicate glass). The basic physical properties of the three are summarized in Table 4.

Table 4

| Glass physical properties (Float process) | | Borosilicate glass | Aluminosilicate glass | Soda lime glass |
|---|---|---|---|---|
| | | Schott from Germany Borofloat 33 | CSG Holding Co., Ltd. from China KK3 | Fuyao Co., Ltd. from China SL4Auto |
| Density | g/cm³ | 2.23 | 2.47 | 2.5 |
| Thermal expansion coefficient | 20-300°C, $10^{-7}$/°C | 32.5 | 95 | about 80 |
| Heat transfer coefficient | W/(m·K) | 1.2 | | 0.81 |
| Elastic modulus (Young's modulus) | GPa (= kN/mm²) | 64 | 74 | 71.0 |
| Poisson ratio | | 0.2 | 0.217 | 0.23 |

(continued)

| | | Borosilicate glass | **Aluminosilicate** glass | Soda lime glass |
|---|---|---|---|---|
| Shear modulus | GPa (= kN/mm$^2$) | | 29 | 28.9 |
| Vickers hardness (before chemical reinforcement) | (200 g load) kgf/mm$^2$ | | 605 | |
| Vickers hardness (after chemical reinforcement) | | n.a. | 685 | |
| Flexural (bending) strength | MPa | 150 | 680 (after chemical reinforcement) | 90 |

It can be seen from the data in Table 4 that the density of borosilicate glass (Borofloat 33) is 2.23 g/cm$^3$, which is 10.8% lower than the 2.5 g/cm$^3$ of soda-lime glass, and both the bending strength and elastic modulus of borosilicate glass are higher than those of soda-lime glass. Therefore, by replacing soda-lime glass with borosilicate glass, the weight can be reduced by about 10% under the same volume, and the material strength can be slightly improved. The density difference between aluminosilicate glass and soda-lime glass is only 1%, so there is no significant density reduction effect. However, the bending strength of the chemically-reinforced high aluminum glass (KK3) is as high as 680 MPa, which is far greater than that of soda-lime glass. The bending strength of the chemically-reinforced high aluminum glass is also 2-3 times higher than that of the physically-tempered or chemically-tempered soda-lime glass, so the high aluminum glass (for example, KK3) can realize weight reduction by reducing the thickness but still maintaining or even increasing the strength of glass. Of course, it is also possible to use borosilicate glass in combination with the high aluminum glass with a reduced thickness to replace the original soda-lime glass. By means of such a combination, the weight of the side window glass module can be reduced to the greatest extent. Furthermore, it is also possible to reduce the thickness of the PVB sound insulation film if necessary, but corresponding remedial methods are required to improve the sound insulation effect.

For sound insulation and thermal insulation, especially the sound insulation effect, the mass law is the first factor to be considered. In short, the so-called mass law means that when sound waves transfer energy, an object with a greater mass can have a better sound insulation effect. Replacing the soda-lime glass originally used for the side window glass module with the borosilicate glass with a relatively low density or the high aluminum glass with a reduced thickness means that the window glass will have a reduced mass and thus a reduced sound insulation effect. However, for a high-speed train with a speed of 400 km/h, it is necessary to improve the sound insulation effect of the side window. In this case, it will obviously be a dilemma if the improvement of thermal insulation effect is also taken into account. This is because weight reduction will lead to the sacrifice of thermal insulation and sound insulation. If the thermal insulation and sound insulation capabilities are to be improved without increasing the mass, it will be best to introduce a vacuum layer. As is well-known, it is difficult for heat and sound waves to be transferred in a vacuum layer with a radiation-resistant plated film. Therefore, in the present invention, using the principle that vacuum is capable of thermal insulation and sound insulation, a vacuum layer is introduced to the glass module so as to meet the requirements for weight reduction, thermal insulation and sound insulation at the same time, while reducing the weight of the side window glass module of the high-speed train by 10%.

Table 5

| Thermal insulation glass window type | Thermal conductivity U (W/m$^2$·K) | Sound reduction index (dB) |
|---|---|---|
| Window glass (single glass) | 5-7 | |
| Low-E-plated glass (single glass) | 3.5-5 | 25 |
| Insulated glass (double glass and single cavity) | 2.5-3 | |
| Low-E-plated insulated glass (double glass and single cavity) | 1.5-2.5 | 27 |
| Low-E-plated insulated glass (three glass and two cavities) | 1.2-2 | 30 |
| Low-E-plated vacuum glass (double glass and single vacuum cavity) | ≤1 | 34 |
| Remarks: All of the glass materials in this table are soda-lime glass, and the thickness of a single glass pane is 6 mm. | | |

The excellent thermal insulation and sound insulation effects of vacuum glass can be seen from the comparison of the data in Table 5. Additionally, two layers of adhesive film are introduced to the glass structure of the side window of the high-speed train to form the insulated laminated glass. With a side window of a high-speed train having a speed of 350 km/h as an example, the glass module structure thereof is as shown in Fig. 1A. Compared with the Low-E-plated insulated glass with double glass and a single cavity in Table 5, such a glass window structure with 4 glass, 2 adhesive films and a single cavity has a thermal conductivity up to 1.4 W/m$^2$·K and a Rw improved to 43 dB. It can also be seen from the data in Table 5 that by comparing the Low-E-plated vacuum glass (double glass and a single vacuum cavity) with the Low-E-plated insulated glass (double glass and a single cavity), both of which have a structure with two glass and a single cavity, but the thermal conductivity and the sound reduction index can be significantly reduced by replacing the hollow layer with the vacuum layer.

Based on the observation and analysis above, a vacuum, laminated, and insulated glass side window is designed and manufactured to meet or exceed the performance requirements for the side window of a high-speed train with a speed of 400 km/h. the structure and the weight reduction of a laminated insulated glass module comprising a vacuum layer are first analyzed below. As shown in Fig. 1B, the left side of the side window is still the combination of glass G1/adhesive film F1/glass G2. Since the left side is the side exposed to the environment outside the carriage, the emphasis is on (1) relatively high safety and impact-resistance concerns, (2) blocking the heat, radiation and sound waves from the outside or reflecting them back to the external environment to the greatest extent, and (3) maintaining for glass G1 the same appearance condition as that of the window previously used in high-speed trains. Therefore, glass G1 is preferably maintained to be the thickest and have unchanged appearance and color, and is still gray soda-lime glass. Likewise, both adhesive film F1 and Low-E plated film remain unchanged. However, the glass G2 can be adjusted. The structure on the right side in Fig. 1B is adjusted to a vacuum laminated combination of G3/V/G4/F2/G5, the main part of which is high aluminum glass with a reduced thickness. The layer between the left side and the right side is still a hollow layer filled with argon, and the total thickness T of the window is controlled by adjusting the thickness of the hollow layer A, and in this case, T can be adjusted to the original thickness of 35 mm. Alternatively, when the total thickness of the window is required to be reduced in future, it is possible to flexibly reduce the total thickness of the window by reducing the thickness of the hollow layer A.

The mathematical model of weight reduction can be described as follows. Supposing that the sheets of glass and the adhesive films constituting the glass window have identical length L and identical height h, with variation only in thickness and material (density), then the area thereof is S = L · h. The available glass types are as shown in Table 4, and the calculation for the layers in Fig. 1B can be performed using the symbols and the definitions thereof in Table 6, and the weight reduction percentage can be obtained.

Table 6

| Material | | Density | Thickness ratio | Actual thickness | Weight of each material |
|---|---|---|---|---|---|
| | | g/cm$^3$ | % | cm | g |
| a. | Soda lime glass | D1 | Ps | Ps $\times$ T | Ps $\times$ D1 $\times$ T $\times$ S |
| b. | Aluminosilicate glass | D2 | Pa | Pa $\times$ T | Pa $\times$ D2 $\times$ T $\times$ S |
| c. | Borosilicate glass | D3 | Pb | Pb $\times$ T | Pb $\times$ D3 $\times$ T $\times$ S |
| d. | PVB adhesive film | D$_f$ | Pp | Pp $\times$ T | Pp $\times$ Df $\times$ T $\times$ S |
| e. | Vacuum layer | Dv | Pv | Pv $\times$ T | Pv $\times$ Dv $\times$ T $\times$ S |

Based on the original design (before weight reduction) in Fig. 1A, the weight $W_0$ of the originally-designed side window glass module can be calculated using formula (1):

$$W_0 = S \cdot \left( D_1 \cdot \sum_{i=1}^{4} G_i + D_f \cdot \sum_{i=1}^{2} F_i \right) \qquad (1)$$

Based on the composite structure in Fig. 1B: G1/F1/G2/A/G3/V/G4/F2/G5, since the weight of argon in the hollow layer is negligible, it is assumed that the total thickness of the material layers with a weight is T, then T can be expressed by the following formula:

$$T = G1 + G2 + G3 + G4 + G5 + V + F1 + F2 \qquad (2)$$

The weight $W_{avl}$ of the glass module (laminated, insulated and vacuum) can be calculated by the following formula:

$$W_{avl} = S \cdot \left( D_g \cdot \Sigma_{i=1}^5 G_i + D_v \cdot V + D_f \cdot \Sigma_{i=1}^2 F_i \right) \tag{3}$$

The $D_g$ in the formula above is defined as $D_g = P_s \cdot D_1 + P_a \cdot D_2 + P_b \cdot D_3$.

If the thickness ratio of the three glass materials, the vacuum layer and the adhesive film is known, the calculation method can be simplified by first calculating the mixed average density $D_{mix}$, which is defined as follows:

$$D_{mix} = P_s \cdot D_1 + P_a \cdot D_2 + P_b \cdot D_3 + P_p \cdot D_f + P_v \cdot D_v \tag{4}$$

then, $W_{avl}$ can also be calculated using area, thickness, and the mixed average density:

$$W_{avl} = S \cdot T \cdot D_{mix} \tag{5}$$

Therefore, the weight $W_0$ of the side window glass module before weight reduction can be calculated by formula (5):

$$W_0 = S \cdot T_0 \cdot \left( P_s \cdot D_1 + P_p \cdot D_f \right) \tag{6}$$

The side window glass module before weight reduction is the originally-designed combination, which is the combination in Fig. 1A. In this case, the $P_a$, $P_b$ and $P_v$ in formulas (3) and (4) can be set as 0, that is, $P_a = P_b = P_v = 0$, and $T_0$ represents the originally-designed thickness (excluding the thickness of the hollow layer).

Here, the calculation formula of weight reduction percentage can be obtained. If $\Delta W$ represents the weight reduction percentage, then

$$\Delta W = \frac{W_0 - W_{avl}}{W_0} \tag{7}$$

Formulas (4), (5) and (6) are applied to formula (7) to obtain formula (8):

$$\Delta W = 1 - \frac{T \cdot D_{mix}}{T_0 \cdot \left( P_s \cdot D_1 + P_p \cdot D_f \right)} = 1 - \frac{T \cdot D_{mix}}{T_0 \cdot k} \tag{8}$$

The k in formula (8) represents the originally-designed mixed average density, $k = P_s \cdot D_1 + P_p \cdot D_f$. The original design before weight reduction is regarded as the original weight, so $T_0 \cdot k$ can be regarded as a constant. Therefore, the factors influencing $\Delta W$ are only T (the total thickness of those having a weight) and $D_{mix}$, which is consistent with the previously-discussed results. Based on formula (8), different combinations of glass material and thickness can be assumed, and the weight reduction percentage of a laminated, vacuum and insulated glass window can be calculated. With the combinations having a practical application value taken into account, the calculation results are summarized in Table 7. Based on the current specifications for side windows of high-speed trains, the window plate has a length L of 1,420 mm and a height h of 750 mm; the glass G1 is a soda-lime glass with an unchanged thickness of 6 mm; F1 is a PVC sound insulation film also with an unchanged thickness of 1.52 mm; the densities in Table 7 can be referred to for the values of glass density $D_1$, $D_2$ and $D_3$; the PVB adhesive film has a density ($D_f$) of 1.07 g/cm$^3$; and the vacuum layer has a density of 0.30 g/cm$^3$. If the speed of a high-speed train is increased from 350 km/h to 400 km/h, the weight reduction required for the side window glass module is not less than 10%, and formula (8) can be rewritten as:

$$\Delta W = 1 - \frac{T \cdot D_{mix}}{T_0 \cdot k} \geq 10\% \tag{9}$$

After arrangement, a conditional expression (10) can be obtained:

$$T \cdot D_{mix} \leq 0.9 T_0 \cdot k \tag{10}$$

wherein $D_{mix} = P_s \cdot D_1 + P_a \cdot D_2 + P_b \cdot D_3 + P_p \cdot D_f + P_v \cdot D_v$ and $k = P_s \cdot D_1 + P_p \cdot D_f$.

Table 7

| Example | W₀ | Ex. 1 | Ex. 2 | Ex. 3 | Ex. 4 | Ex. 5 |
|---|---|---|---|---|---|---|
| Ps | 85.6% | 0.0% | 28.5% | 32.8% | 83.3% | 47.3% |
| Pa | 0.0% | 0.0% | 57.0% | 53.1% | 0.0% | 35.2% |
| Pb | 0.0% | 85.6% | 0.0% | 0.0% | 0.0% | 0.0% |
| Pp | 14.5% | 14.5% | 14.4% | 12.5% | 15.2% | 16.0% |
| Pv | 0.0% | 0.0% | 0.0% | 1.6% | 1.5% | 1.6% |
| T(cm) | 2.10 | 2.10 | 2.10 | 1.83 | 2.00 | 1.90 |
| Dmix | 2.29 | 2.06 | 2.28 | 2.27 | 2.25 | 2.23 |
| W | 51.39 | 46.21 | 51.01 | 44.19 | 48.02 | 45.15 |
| ΔW | 0.00 | 10.1% | 0.7% | 14.0% | 6.5% | 12.1% |
| Description | 6SL+1.52P+4SL+14A+4SL+1.52P+4SL<br>Wholly soda-lime | 6BS+1.52P+4BS+14A+4BS+1.52P+4BS<br>Wholly borosilicate | 6SL+1.52P+4AS+14A+4AS+1.52P+4AS<br>1 soda-lime and 3 aluminosilicate | 6SL+1.52P+3AS+16A+3AS+0.3V+2AS+0.76P+2AS<br>1 soda-lime and 4 aluminosilicate | 6SL+1.52P+4SL+14A+3SL+0.3V+2SL+1.52P+2SL<br>Wholly soda-lime | 6SL+1.52P+3SL+14A+3AS+0.3V+2AS+1.52P+2AS<br>2 soda-lime and 3 aluminosilicate |
| Form | Laminated and insulated | Laminated and insulated | Laminated and insulated | Laminated, insulated and vacuum | Laminated, insulated and vacuum | Laminated, insulated and vacuum |

| Example | W₀ | Ex. 6 | Ex. 7 | Ex. 8 | Ex. 9 | Ex. 10 |
|---|---|---|---|---|---|---|
| Ps | 85.6% | 49.2% | 31.5% | 47.3% | 49.9% | 34.7% |
| Pa | 0.0% | 36.7% | 50.9% | 19.4% | 18.5% | 33.0% |
| Pb | 0.0% | 0.0% | 0.0% | 15.8% | 15.0% | 17.4% |
| Pp | 14.5% | 12.5% | 16.0% | 16.0% | 15.2% | 13.2% |
| Pv | 0.0% | 1.6% | 1.6% | 1.6% | 1.5% | 1.7% |
| T(cm) | 2.10 | 1.83 | 1.90 | 1.90 | 2.00 | 1.73 |
| Dmix | 2.29 | 2.27 | 2.22 | 2.19 | 2.20 | 2.22 |
| W | 51.39 | 44.28 | 45.05 | 44.38 | 47.04 | 40.79 |
| ΔW | 0.00 | 13.58% | 12.3% | 13.6% | 8.5% | 20.6% |

(continued)

| Example | $W_0$ | Ex. 1 | Ex. 2 | Ex. 3 | Ex. 4 | Ex. 5 |
|---|---|---|---|---|---|---|
| Description | 6SL+1.52P +4SL+14A +4SL+1.52 P+4SL | 6SL+1.52P+3 SL+14A+3A S+0.3V+2AS +0.76P+2AS | 6SL+1.52P+3 AS+14A+3A S+0.3V+2AS +1.52P+2AS | 6SL+1.52P+3A S+14A+3BS+0. 3V+2AS+1.52P +2AS | 6SL+1.52P+4S L+14A+3BS+0 .3V+2AS+1.52 P+2AS | 6SL+1.52P+3 BS+0.3V+3A S+0.76P+3AS |
| | Wholly soda-lime | 2 soda-lime and 3 aluminosilicat e | 1 soda-lime and 4 aluminosilicat e | 1 soda-lime, 1 borosilicate and 3 aluminosilicate | 2 soda-lime, 1 borosilicate and 2 aluminosilicate | 1 soda-lime and 3 aluminosilicat e |
| Form | Laminated and insulated | Laminated, insu-lated and vacuum | Laminated, insu-lated and vacuum | Laminated, insulated and va-cuum | Laminated, insulated and va-cuum | Laminated, insu-lated and vacuum |

Here, given in the line of 'description' are the specific compositions of the laminated insulated glass (only comprising a hollow layer) and laminated, insulated and vacuum glass (comprising a hollow layer and a vacuum layer), wherein SL represents a soda-lime glass, P represents a PVB adhesive film, A represents a hollow layer, AS represents an aluminosilicate glass, V represents a vacuum layer, and BS represents a borosilicate glass. The number before the letter represents a thickness, for example: 6SL represents a 6 mm thick soda-lime glass. The number before the glass name represents the number of sheets of glass used in the laminated glass. For example, 2 soda-lime represents that 2 sheets of soda-lime glass are used.

Of the 10 combinations listed in Table 7, 7 combinations including Ex. 1, 3, 5, 6, 7, 8 and 10 can achieve the goal of 10% weight reduction. These are just examples, and there are many combinations that can achieve 10% weight reduction, not limited to the 7 combinations described here. With manufacturing cost and other related factors taken into account, the combination in Ex. 7 is preferably used for actual measurements.

With respect to the thermal insulation and sound insulation tests of the laminated vacuum structure of 4 layers of glass + 2 layers of adhesive film + 1 hollow layer + 1 vacuum layer (as shown in Fig. 1B), the weight reduction design in Ex. 7 was selected for implementation and actual measurements.

Based on the glass module design in Ex. 7, the making of a sample was described as follows: a soda-lime glass with a thickness of 6 mm was used as glass G1; glass G2, glass G3, glass G4 and glass G5 were made of a chemically-reinforced high aluminum glass with thicknesses of 3 mm, 3 mm, 2 mm and 2 mm respectively; and a PVB sound insulation film with a thickness of 1.52 mm was still used for adhesive film F1 and adhesive film F2. Sample specification: the lengths and heights of glass G1, glass G2, glass G5, adhesive film F1 and adhesive film F2 were 1,420 mm and 750 mm respectively. Glass G3 and glass G4 were laser-welded together to form a boss structure (as shown in Fig. 2B). In this case, glass G3 protruded by 20 mm and had a length of 1,460 mm and a width of 790 mm. The vacuum layer V was formed by the following steps: glass G3 was chemically etched until a depth of 0.3 mm, and the edge was left with a width of 14 mm not etched. As the position for laser-welding with glass G4, glass G3 had a boss width of 20 mm, of which there was an unetched zone of 14 mm close to the outer edge of the plate, and the rest was an etched zone with a width of 6 mm. Within the range of 6 mm, at least one step hole was opened to serve as a suction hole and to contain a gas absorbing agent. Glass G4 had a boss width of 25 mm, which was 5 mm longer than that of glass G3, such that an L-shaped step can be formed between glass G3 and glass G4 (as shown in Fig. 2B). This was a necessary structural design. The L-shaped step was conducive to the filling of a liquid sealant after welding. The sealant can be used for the secondary hermetic sealing of the periphery of the vacuum layer, so as to reinforce again the laser hermetic welding. Thereby, the gas-tightness of the vacuum layer can be affected by both methods, improving the reliability of vacuum gas-tightness.

A flexible micro-pillar described in the patent application No. 202210074202.5 was used in the vacuum layer. The pillar had a diameter not more than 0.5 mm and an ultra-low heat transfer coefficient of 0.03 W/m·K. A special sound insulation structure of the flexible micro-pillar was used. The flexible pillars had an average spacing of 30 mm. The gas pressure in the vacuum layer V was 0.01 Pa and the vacuum layer V had a height not more than 0.3 mm. An autoclave was used for the lamination of G1/F1/G2, with a pressure of 1.4 MPa and a temperature of 120°C-125°C. Likewise, the autoclave process was also used to complete the lamination of G4/F2/G5. First, a hole was punched on Glass G3, then chemical etching was performed, followed by chemical reinforcement. Then, the treated glass G3 and the laminated G4/F2/G5 were welded together by laser. An unactivated chemical gas-absorbing agent shall be properly placed before welding. Then, the periphery was sealed with a sealant, followed by procedures such as evacuating and activating the chemical gas-absorbing agent, so as to obtain a test sample.

The thermal conductivity test was based on the national standard GB/T 8484-2020, and GB/T 10294-2008 and GB/T 10295-2008 were also referred to. The test results showed that the glass module design in Ex. 7 can realize a thermal conductivity U value lower than 0.9 W/m²·K, which meets the requirements for side windows of high-speed trains with a speed of 400 km/h. The measurement of sound reduction index was mainly based on the national standard GB 19889.3-2005, and GB/T 31004.1-2014 was also referred to. It can be seen from the test results that the glass module design in Ex. 7 can meet the requirement that the Rw shall be greater than 46 dB.

**Claims**

1. A laminated vacuum glass comprising a first glass pane, a second glass pane, and a vacuum layer formed between the first glass pane and the second glass pane, wherein the first glass pane is a laminated glass formed by at least two layers of glass and at least one layer of an adhesive film;
and the edge of the vacuum layer is sealed by cold laser welding.

2. The laminated vacuum glass according to claim 1, wherein the thickness of the vacuum layer is 0.1 to 0.5 mm.

3. The laminated vacuum glass according to claim 1, wherein the thickness of the vacuum layer is 0.2 to 0.35 mm.

4.  The laminated vacuum glass according to claim 1, wherein a hollow layer is provided in the first glass pane or the second glass pane.

5.  The laminated vacuum glass according to claim 4, wherein the thickness of the hollow layer is 8 to 16 mm.

6.  The laminated vacuum glass according to any one of claims 1-5, wherein the first glass pane is a laminated glass formed by two layers of glass and one layer of an adhesive film; and the thicknesses of the two layers of glass are not less than 3 mm and not less than 1 mm respectively, the total thickness of the two layers of glass is not more than 10 mm, and the thickness of the adhesive film is not less than 0.7 mm.

7.  The laminated vacuum glass according to any one of claims 1-5, wherein the first glass pane is a laminated glass formed by three layers of glass and one layer of an adhesive film, and the hollow layer is provided between two of the three layers of glass.

8.  The laminated vacuum glass according to any one of claims 1-7, wherein the second glass pane is a laminated glass formed by at least two layers of glass and at least one layer of an adhesive film.

9.  The laminated vacuum glass according to any one of claims 1-7, wherein the second glass pane is a laminated glass formed by at least three layers of glass and at least two layers of adhesive films.

10. The laminated vacuum glass according to claim 8, wherein the second glass pane is a laminated glass formed by two layers of glass and one layer of an adhesive film; and the thicknesses of the two layers of glass are not less than 2 mm and not less than 1 mm respectively, the total thickness of the two layers of glass is not more than 8 mm, and the thickness of the adhesive film is not less than 0.7 mm.

11. The laminated vacuum glass according to claim 9, wherein the second glass pane is a laminated glass formed by three layers of glass and two layers of adhesive films; and the total thickness of the three layers of glass is not more than 8 mm, and the total thickness of the two layers of adhesive films is not more than 3.2 mm.

12. The laminated vacuum glass according to any one of claims 1-11, wherein the glass is selected from one of or a combination of two or more of soda-lime glass, aluminosilicate glass, and borosilicate glass.

13. The laminated vacuum glass according to any one of claims 1-12, wherein the adhesive film is selected from one of a PVB film, an EVA film, an SGP film, and a TPU film.

14. The laminated vacuum glass according to any one of claims 1-13, wherein the number of welded seams of the cold laser welding is determined according to the following formula:

$$N > \frac{\alpha \cdot \Delta T \cdot E \cdot H}{S_{sealing} \cdot w}$$

where N is the number of welded seams;
w is the average width of welded seams, in mm;
$S_{sealing}$ is the welding strength of the weld sealing region, in MPa;
$\alpha$ is the thermal expansion coefficient of the glass, in °C$^{-1}$;
$\Delta T$ is the temperature difference between the glass panes on the opposite sides of the vacuum layer, in °C;
E is the elastic modulus (Young's modulus) of the glass, in MPa; and
H is the thickness of a thermally expanded glass pane, in mm.

15. The laminated vacuum glass according to any one of claims 1-14, wherein the vacuum layer is provided with micro-pillars.

16. The laminated vacuum glass according to claim 15, wherein the micro-pillar is a flexible micro-pillar which has at least one fiber layer.

17. The laminated vacuum glass according to claim 16, wherein the flexible micro-pillar has a composite structure formed by two or more fiber layers.

18. The laminated vacuum glass according to claim 17, wherein the flexible micro-pillar has a composite structure formed by at least two fiber layers and at least one metal layer and/or alloy layer, wherein the metal layer and/or alloy layer is located between the two fiber layers.

19. The laminated vacuum glass according to claim 18, wherein the flexible micro-pillar has a composite structure formed by at least three fiber layers and at least two metal layers and/or alloy layers, wherein the metal layers and/or alloy layers are separately sandwiched between two of the fiber layers.

20. The laminated vacuum glass according to any one of claims 15-19, wherein the thickness of the fiber layer is 0.1 mm to 3.0 mm.

21. The laminated vacuum glass according to any one of claims 18-20, wherein the thickness of the metal layer or alloy layer is 0.3 mm or less.

22. The laminated vacuum glass according to any one of claims 18-20, wherein the thickness of the metal layer or alloy layer is 0.01 mm to 0.3 mm.

23. The laminated vacuum glass according to claim 16, wherein the diameter of the flexible micro-pillar is 0.2 mm to 2.0 mm.

24. The laminated vacuum glass according to claim 16, wherein the diameter of the flexible micro-pillar is 0.2 mm to 0.5 mm.

25. The laminated vacuum glass according to claim 16, wherein the thermal conductivity of the flexible micro-pillar is $\leq 1$ W/m·K (25°C).

26. The laminated vacuum glass according to claim 16, wherein the thermal conductivity of the flexible micro-pillar is $\leq$ 0.25 W/m·K (25°C).

27. The laminated vacuum glass according to any one of claims 15-26, wherein the fiber layer is made of ultrafine fibers.

28. The laminated vacuum glass according to claim 27, wherein the material for the ultrafine fiber is one of or a combination of two or more of aluminosilicate glass, boroaluminosilicate glass, soda-lime glass, borosilicate glass, quartz glass, metal, and alloy.

29. The laminated vacuum glass according to any one of claims 15-28, wherein the thermal conductivity of the fiber layer is $\leq 0.03$ W/m·K (25°C).

30. The laminated vacuum glass according to any one of claims 15-29, wherein the specific surface area of the fiber layer is 700 to 800 m$^2$/g.

31. The laminated vacuum glass according to any one of claims 18-20, wherein the material for the metal layer includes one of aluminum, copper, iron, tin, and zinc;
and the material for the alloy layer includes an alloy of two or more elements of aluminum, copper, iron, tin, and zinc.

32. The laminated vacuum glass according to claim 31, wherein the alloy includes stainless steel.

33. The laminated vacuum glass according to any one of claims 16-19 and 23-26, wherein the height of the micro-pillar under the compression of a pressure at 1 atmosphere is not less than 0.10 mm.

34. The laminated vacuum glass according to claim 33, wherein the height of the micro-pillar under the compression of a pressure at 1 atmosphere is 0.15 to 0.5 mm.

35. The laminated vacuum glass according to claim 33, wherein the height of the micro-pillar under the compression of a pressure at 1 atmosphere is 0.15 to 0.25 mm.

36. A method for preparing a laminated vacuum glass according to any one of claims 1-35, comprising the steps of:

installing a glass edge strip and disposing micro-pillars between the first glass pane and the second glass pane; and welding the glass edge strip to the first glass pane and the second glass pane respectively by cold laser welding, and then evacuating to form a vacuum layer, followed by sealing the edge and the port to obtain the laminated vacuum glass;
or,
forming a groove on the surface of the first glass pane or the surface of the second glass pane; and welding the first glass pane to the second glass pane by cold laser welding, wherein the welding is carried out at the edge of the groove, and then evacuating to form a vacuum layer, followed by sealing the edge and the port to obtain the laminated vacuum glass.

37. The method according to claim 36, wherein the full width at half maximum of the laser pulse of the cold laser is less than or equal to 20 pico seconds.

38. The method according to claim 36 or 37, wherein the wavelength of the cold laser is 800 nm to 1600 nm, and the repetition rate of the cold laser is 1 Hz to 10 MHz.

39. The method according to claim 36, wherein the gap between the glass panes at the weld is less than 40 $\mu$m.

40. The method according to claim 36, wherein the gap between the glass panes at the weld is less than 25 $\mu$m.

41. The method according to claim 36, wherein the width of the seam at the weld is not greater than 20 $\mu$m.

42. The method according to claim 41, wherein the width of the seam at the weld is less than 5 $\mu$m.

43. The method according to claim 36, 41 or 42, wherein the welding strength of the seam at the weld is greater than the thermal expansion shear stress between the two glass panes welded.

44. The method according to claim 36, 41 or 42, wherein the welding strength of the seam at the weld is at least greater than 1 MPa or satisfies:

$$S_{sealing} > \frac{\alpha \cdot \Delta T \cdot E \cdot H}{d}$$

where $S_{sealing}$ is the welding strength of a weld sealing region, in MPa;
$\alpha$ is the thermal expansion coefficient of the glass, in °C$^{-1}$;
$\Delta T$ is the temperature difference between the glass panes on the opposite sides of the vacuum layer, in °C;
E is the elastic modulus of the glass, in MPa;
H is the thickness of a thermally expanded glass pane, in mm;
and d is the width of the weld sealing region, in mm.

45. The method according to any one of claims 36 and 41-44, wherein the spacing distance between the welded seams is not less than 150 $\mu$m, and the depth of the seam at each of the two glass panes welded is not less than 20 $\mu$m.

46. The method according to any one of claims 36 and 41-45, wherein the overall shape of the seam at the weld is consecutive or discontinuous.

47. The method according to claim 46, wherein a single seam is in a form of a straight line, an oblique line or a broken line.

48. The method according to claim 46, wherein the welded seams have an overall shape of straight lines parallel to each other, or oblique lines parallel to each other, or broken lines parallel to each other; or, the welded seams have an overall shape of discontinuous straight lines parallel to each other, or staggered oblique lines, or consecutive fish-like lines.

49. The method according to claim 46, wherein the welded seams have an overall shape of one of the shapes shown in Figure 4.

50. Use of a laminated vacuum glass according to any one of claims 1-35 as a vehicle window or a building exterior window.

51. The use according to claim 50, wherein the laminated vacuum glass is used as a window of a high-speed train.

52. The use according to claim 51, wherein the laminated vacuum glass is used as a window of a high-speed train with a speed of 400 km/h.

G1　F1　G2　　　　　A　　　　　G3　F2　G4

h

Figure 1A

G1　F1　G2　　　　　A　　　　G3　V　G4　F2　G5

h

Figure 1B

G1 F1 G2 V G3 F2 G4

h

Figure 1C

Figure 2A

Figure 2B

Figure 3

| | Straight lines | Oblique lines | Broken lines |
|---|---|---|---|
| Consecutive | | | |
| Discontinuous | | | |

Figure 4

Figure 5A

Figure 5B

## INTERNATIONAL SEARCH REPORT

International application No.

**PCT/CN2022/113495**

### A. CLASSIFICATION OF SUBJECT MATTER

C03C 27/10(2006.01)i;  B32B 17/10(2006.01)i;  B32B 27/30(2006.01)i;  B32B 27/42(2006.01)i;  B32B 27/40(2006.01)i;
B32B 17/06(2006.01)i;  B32B 33/00(2006.01)i;  B60J 1/00(2006.01)i;  B61D 25/00(2006.01)i

According to International Patent Classification (IPC) or to both national classification and IPC

### B. FIELDS SEARCHED

Minimum documentation searched (classification system followed by classification symbols)

C03C B32B B60J B61D

Documentation searched other than minimum documentation to the extent that such documents are included in the fields searched

Electronic data base consulted during the international search (name of data base and, where practicable, search terms used)

CNTXT; CNKI; WPABS; VEN; WOTXT; EPTXT; USTXT; ISI_WEB OF SCIENCE: 福耀高性能玻璃科技(福建)有限公司, 丁原杰, 叶舒, 玻璃, 真空, 夹胶, 激光, 焊接, 支撑, 支柱, 柔性, glass+, vacuum, laminated, adhesive film, laser, welding, support column, flexibility

### C. DOCUMENTS CONSIDERED TO BE RELEVANT

| Category* | Citation of document, with indication, where appropriate, of the relevant passages | Relevant to claim No. |
|---|---|---|
| PX | CN 114772950 A (FUYAO HIGH PERFORMANCE GLASS TECHNOLOGY (FUJIAN) CO., LTD.) 22 July 2022 (2022-07-22)<br>claims 1-31 | 1-52 |
| Y | CN 112878869 A (FUYAO GLASS INDUSTRY GROUP CO., LTD.) 01 June 2021 (2021-06-01)<br>description, paragraphs 0006-0016 | 1-13, 15-43, 45-52 |
| Y | CN 214786918 U (FUYAO GLASS INDUSTRY GROUP CO., LTD.) 19 November 2021 (2021-11-19)<br>claims 1-9 | 1-13, 15-43, 45-52 |
| Y | CN 203937254 U (XINYI AUTOMOBILE GLASS (DONGGUAN) CO., LTD.) 12 November 2014 (2014-11-12)<br>claims 1-10 | 1-13, 15-43, 45-52 |
| Y | CN 109563726 A (CORNING INC.) 02 April 2019 (2019-04-02)<br>claims 19-23 | 1-13, 15-43, 45-52 |

☑ Further documents are listed in the continuation of Box C.      ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **31 October 2022** | **01 December 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

International application No.

**PCT/CN2022/113495**

**C.    DOCUMENTS CONSIDERED TO BE RELEVANT**

| Category* | Citation of document, with indication, where appropriate, of the relevant passages | Relevant to claim No. |
|---|---|---|
| Y | CN 113562989 A (CHONGQING YINGNUOWEI ENERGY SAVING ENVIRONMENTAL PROTECTION TECHNOLOGY CO., LTD.) 29 October 2021 (2021-10-29) <br> claim 1 | 1-13, 15-43, 45-52 |
| Y | CN 114211114 A (BEIJING SHENGSHENG TECHNOLOGY CO., LTD.) 22 March 2022 (2022-03-22) <br> claims 1-5 | 1-13, 15-37, 39-43, 45-52 |
| Y | CN 110156347 A (WUHAN UNIVERSITY OF TECHNOLOGY) 23 August 2019 (2019-08-23) <br> claims 1-6 | 16-43, 45-52 |
| A | CN 101215076 A (ZUO SHUSEN) 09 July 2008 (2008-07-09) <br> entire document | 1-52 |
| A | 李创业 等 (LI, Chuangye et al.). "激光焊接间距和焊接道次对玻璃与铝合金封接性能的影响极其机理研究 (Non-official translation: Effect of Laser Welding Spacing and Welding Passes on the Sealing Properties of Glass and Aluminum Alloy and its Mechanism)" <br> 中国激光 (Chinese Journal of Lasers), Vol. 43, No. 7, 31 July 2016 (2016-07-31), ISSN: 0258-7025, <br> entire document | 1-52 |

Form PCT/ISA/210 (second sheet) (January 2015)

INTERNATIONAL SEARCH REPORT
Information on patent family members

International application No.

**PCT/CN2022/113495**

| Patent document cited in search report | | | Publication date (day/month/year) | Patent family member(s) | | | Publication date (day/month/year) |
|---|---|---|---|---|---|---|---|
| CN | 114772950 | A | 22 July 2022 | None | | | |
| CN | 112878869 | A | 01 June 2021 | None | | | |
| CN | 214786918 | U | 19 November 2021 | None | | | |
| CN | 203937254 | U | 12 November 2014 | None | | | |
| CN | 109563726 | A | 02 April 2019 | WO | 2017210701 | A1 | 07 December 2017 |
| | | | | US | 2019177219 | A1 | 13 June 2019 |
| CN | 113562989 | A | 29 October 2021 | None | | | |
| CN | 114211114 | A | 22 March 2022 | None | | | |
| CN | 110156347 | A | 23 August 2019 | None | | | |
| CN | 101215076 | A | 09 July 2008 | CN | 101215076 | B | 04 July 2012 |

Form PCT/ISA/210 (patent family annex) (January 2015)

**EP 4 527 813 A1**

**Patent documents cited in the description**

- WO 202210074202 A